# EUROPEAN PATENT APPLICATION

(11) **EP 2 722 758 A2**
(43) Date of publication of application: **23.04.2014**
(21) Application number: 13189778.7
(22) Date of filing: 22.10.2013
(51) Int. Cl.: G06F 9/48

(54) **Mobile terminal and controlling method thereof**

(30) Priority: 22.10.2012 KR 20120117290
(71) Applicant: LG Electronics, Inc., Seoul, 150-721 (KR)
(72) Inventor: Lee, Jieun, Seoul 153-801 (KR); Na, Sungchae, Seoul 153-801 (KR)
(74) Representative: Cabinet Plasseraud

(57) **Abstract**

Disclosed are a mobile terminal and controlling method thereof, by which a setup of a notification time for a job-incomplete function can be facilitated. The present invention includes a touchscreen and a controller, if a 1^{st} application is interrupted, ended or job-switched to a 2^{nd} application, determining whether the 1^{st} application is in job incomplete state, the controller if the 1^{st} application is in the job incomplete state, displaying a time setting means divided by a prescribed time unit on the touchscreen, the controller, if a time is set in response to a touch input applied to the time setting means, registering the set time with a predetermined region, the controller, if the set time expires, controlling a notification information on the 1^{st} application to be displayed on the touchscreen.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a setup of a notification time for a job-incomplete function.

### Discussion of the Related Art

Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

To support and increase the terminal functions, it may be able to consider the improvement of structural parts and/or software parts of the terminal.

Recently, various kinds of functions or applications can be simultaneously activated in a smart mobile terminal. In doing so, while a job for one application is incomplete, the corresponding application may be interrupted or another application may be activated. If so, it may be necessary to remind a user that the job-incomplete application still exists.

### SUMMARY OF THE INVENTION

Accordingly, the present invention is directed to a mobile terminal and controlling method thereof that substantially obviate one or more problems due to limitations and disadvantages of the related art.

One object of the present invention is to provide a mobile terminal and controlling method thereof, by which a user can be informed of a presence of an incomplete job.

Particularly, the object of the present invention is to provide a mobile terminal and controlling method thereof, by which an alarm function activated time can be conveniently set after setting an alarm for the incomplete job.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to one embodiment of the present invention includes a touchscreen and a controller, if a 1^{st} application is interrupted, ended or job-switched to a 2^{nd} application, determining whether the 1^{st} application is in job incomplete state, the controller if the 1^{st} application is in the job incomplete state, displaying a time setting means divided by a prescribed time unit on the touchscreen, the controller, if a time is set in response to a touch input applied to the time setting means, registering the set time with a predetermined region, the controller, if the set time expires, controlling a notification information on the 1^{st} application to be displayed on the touchscreen.

In another aspect of the present invention, a method of controlling a mobile terminal according to another embodiment of the present invention includes the steps of activating a 1^{st} application, interrupting/ending the 1^{st} application or job-switching the 1^{st} application to a 2^{nd} application, determining whether the 1^{st} application is in job incomplete state, if the 1^{st} application is in the job incomplete state, displaying a time setting means divided by a prescribed time unit on a touchscreen, setting a time in response to a touch input applied to the time setting means, registering the set time with a predetermined region, and if the set time expires, displaying a notification information on the 1^{st} application on the touchscreen.

Accordingly, the present invention provides the following effects and/or features.

First of all, an alarm function of informing a user of a presence of an incomplete job can be conveniently set.

Particularly, the present invention can set or modify an alarm time conveniently using a timer gauge. And, the present invention controls the timer gauge to be displayed on a specific region, whereby the presence of the incomplete job and an alarm time can be conveniently checked.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2 is a front perspective diagram of a mobile terminal according to one embodiment of the present invention;

FIG. 3 is a flowchart for one example of a method of setting an alarm due to interruption of an application having an incomplete job in a mobile terminal according to one embodiment of the present invention;

FIG. 4 is a diagram for one example of a method of setting an alarm time after stopping a message writing in a mobile terminal according to one embodiment of the present invention;

FIG. 5 is a diagram for another example of a method of setting an alarm time after stopping a message writing in a mobile terminal according to one embodiment of the present invention;

FIG. 6 is a diagram for one example of a method of changing an alarm time in a mobile terminal according to one embodiment of the present invention;

FIG. 7 is a diagram for one example of a method of setting an alarm time after stopping a message writing in a mobile terminal according to one embodiment of the present invention;

FIG. 8 is a diagram for one example of a method of setting an alarm time after stopping a call application due to a cell signal reception in a mobile terminal according to one embodiment of the present invention;

FIG. 9 is a diagram for one example of a method of checking or changing a set alarm time due to interruption of an application having an incomplete job in a mobile terminal according to one embodiment of the present invention;

FIG. 10 is a diagram for one example of a method of resuming an incomplete job of an interrupted application before expiration of an alarm time set in a mobile terminal according to one embodiment of the present invention;

FIG. 11 is a diagram for one example of an information outputted in response to expiration of an alarm time set for an application interrupted in a job-incomplete state in a mobile terminal according to one embodiment of the present invention;

FIG. 12 is a diagram for another example of a method of setting and checking an alarm according to one embodiment of the present invention; and

FIG. 13 is a diagram of display configuration indicating one example of a function setting screen applicable to embodiments of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used to denote elements in order to facilitate the disclosure only. Therefore, significant meanings or roles are not given to the suffixes themselves, and it is understood that the suffixes 'module', 'unit' and 'part' can be used together or interchangeably.

Features of embodiments of the present invention are applicable to various types of terminals. Examples of such terminals include mobile terminals, such as mobile phones, user equipment, smart phones, mobile computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals such as digital TV, desktop computers and so on.

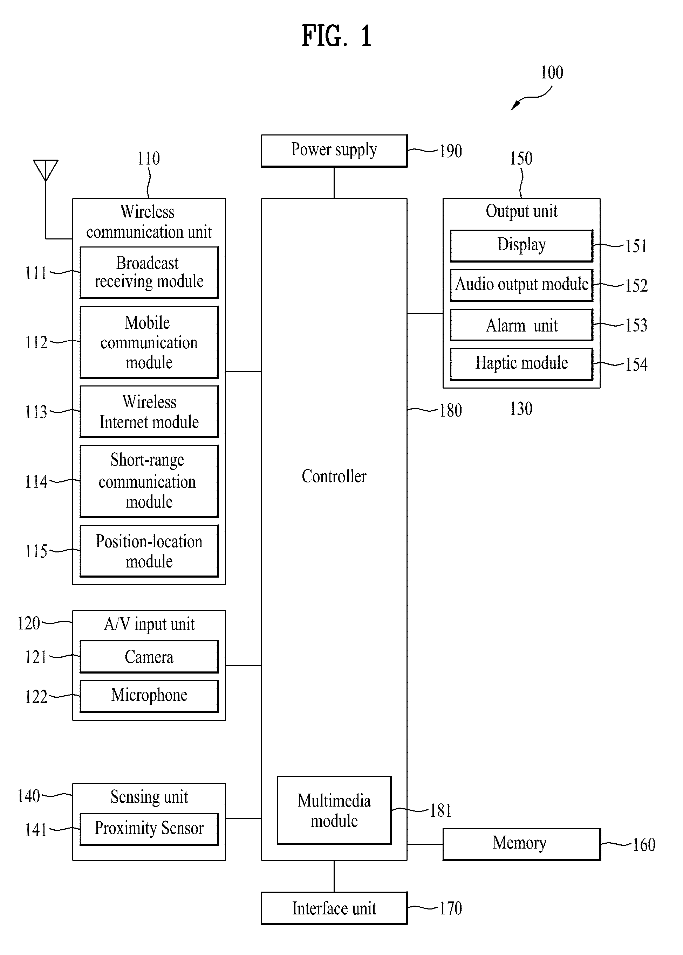

FIG. 1 is a block diagram of a mobile terminal 100 in accordance with an embodiment of the present invention. With reference to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided in the mobile terminal 100 to facilitate simultaneous reception of at least two broadcast channels or broadcast channel switching.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H).

The broadcast receiving module 111 may be configured to receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLO™) and integrated services digital broadcast-terrestrial (ISDB-T). Optionally, the broadcast receiving module 111 can be configured to be suitable for other broadcasting systems as well as the above-noted digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), HSDPA (High Speed Downlink Packet Access), GSM, CDMA, WCDMA, or LTE (Long Term Evolution) .

Wireless Internet access by Wibro™, HSPDA, GSM, CDMA, WCDMA, or LTE is achieved via a mobile communication network. In this regard, the wireless Internet module 113 may be considered as being a kind of the mobile communication module 112 to perform the wireless Internet access via the mobile communication network.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module. The GPS module 115 is able to precisely calculate current 3-dimensional position information based on at least longitude, latitude or altitude and direction (or orientation) by calculating distance information and precise time information from at least three satellites and then applying triangulation to the calculated information. Location information and time information are calculated using three satellites, and errors of the calculated location position and time informations are then amended (or corrected) using another satellite. In addition, the GPS module 115 is able to calculate speed information by continuously calculating a real-time current location.

With continued reference to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Furthermore, the processed image frames can be displayed on the display 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100. As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply unit 190, and the presence or absence of a coupling or other connection between the interface unit 170 and an external device. According to one embodiment, the sensing unit 140 can include a proximity sensor 141.

The output unit 150 generates output relevant to the senses of sight, hearing, and touch. Furthermore, the output unit 150 includes the display 151, an audio output module 152, an alarm unit 153, a haptic module 154, and a projector module 155.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented in a transparent or optical transmittive type, i.e., a transparent display. A representative example of the transparent display is the TOLED (transparent OLED). A rear configuration of the display 151 can be implemented as the optical transmittive type as well. In this configuration, a user may be able to see an object located at the rear of a terminal body on a portion of the display 151 of the terminal body.

At least two displays 151 can be provided in the mobile terminal 100 in accordance with one embodiment of the mobile terminal 100. For instance, a plurality of displays can be arranged to be spaced apart from each other or to form a single body on a single face of the mobile terminal 100. Alternatively, a plurality of displays can be arranged on different faces of the mobile terminal 100.

If the display 151 and a sensor for detecting a touch action (hereinafter called 'touch sensor') are configured as a mutual layer structure (hereinafter called 'touchscreen'), the display 151 is usable as an input device as well as an output device. In this case, the touch sensor can be configured as a touch film, a touch sheet, or a touchpad.

The touch sensor can be configured to convert pressure applied to a specific portion of the display 151 or a variation of capacitance generated from a specific portion of the display 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor.

For clarity and convenience of explanation, an action for enabling the pointer approaching the touchscreen to be recognized as placed on the touchscreen may be named 'proximity touch' and an action of enabling the pointer to actually come into contact with the touchscreen may named 'contact touch'. And, a position, at which the proximity touch is made to the touchscreen using the pointer, may mean a position of the pointer vertically corresponding to the touchscreen when the pointer makes the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations of these devices.

The alarm unit 153 outputs a signal for announcing the occurrence of a particular event associated with the mobile terminal 100. Typical events include a call received, a message received and a touch input received. The alarm unit 153 is able to output a signal for announcing the event occurrence by way of vibration as well as video or audio signal. The video or audio signal can be output via the display 151 or the audio output module 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 is able to generate various tactile effects as well as the vibration. For instance, the haptic module 154 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with an embodiment of the mobile terminal 100.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 160.

Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the mobile terminal 100 is able to operate in association with a web storage for performing a storage function of the memory 160 on the Internet.

The interface unit 170 may be implemented to couple the mobile terminal 100 with external devices. The interface unit 170 receives data from the external devices or is supplied with power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the mobile terminal 100 via the corresponding port.

When the mobile terminal 100 is connected to an external cradle, the interface unit 170 becomes a passage for supplying the mobile terminal 100 with a power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 160, and executed by a controller or processor, such as the controller 180.

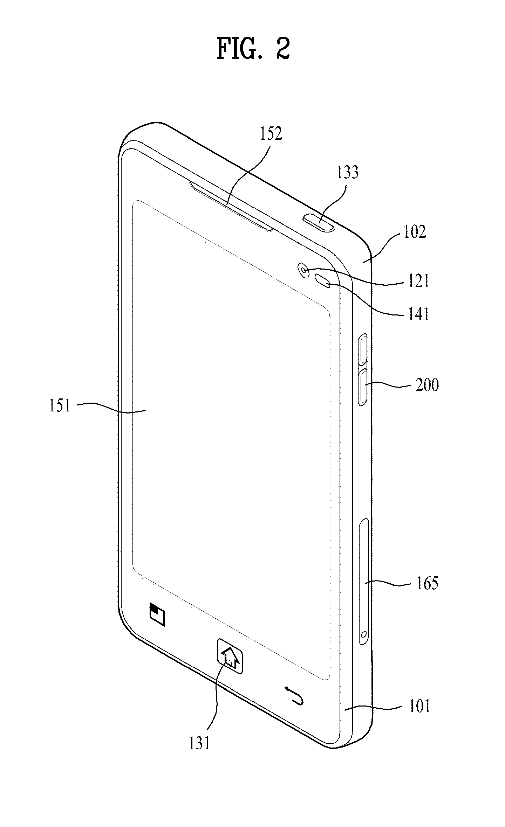

FIG. 2 is a front perspective view of a mobile terminal according to one embodiment of the present invention.

The mobile terminal 100 illustrated in FIG. 2 has a bar type terminal body. However, the mobile terminal 100 may be implemented in a variety of different configurations. Examples of such configurations include folder-type, slide-type, rotational-type, swing-type and combinations thereof. For ease of description, the following disclosure will primarily relate to a bar-type mobile terminal 100. However, it is understood that such disclosure may apply equally to other types of mobile terminals.

Referring to FIG. 2, the mobile terminal 100 includes a case (a casing, housing, or cover) constituting an exterior of the mobile terminal. In the present embodiment, the case can be divided into a front case 101 and a rear case 102. Various electric/electronic parts are loaded in a space (volume) provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output module 152, a camera 121, manipulating units 131 and 132, a microphone 122, and an interface unit 170 can be provided at the terminal body, and more particularly, at the front case 101. Manipulating units 131 and 132 are part of the user input unit 130 (see FIG. 1).

The display 151 occupies most of a main face of the front case 101. The audio output module 152 and the camera 121 are provided at an area adjacent to an end portion of the display 151, while the manipulating unit 131 and the microphone 122 are provided at an area adjacent to the other end portion of the display 151. The manipulating unit 132 and the interface unit 170 can be provided at lateral sides of the front and rear cases 101 and 102.

The user input unit 130 is manipulated (operated) to receive a command for controlling an operation of the terminal 100. Furthermore, the user input unit 130 may include a plurality of manipulating units 131 and 132. The manipulating units 131 and 132 can be referred to as a manipulating portion and may adopt any tactile mechanism that enables a user to perform a manipulation action by touch.

Content input by manipulating units 131 and 132 can be divided between the two. For instance, a command such as start, end, and scroll is input to first manipulating unit 131. Furthermore, a command for a volume adjustment of sound output from the audio output module 152, or a command for a switching to a touch recognizing mode of the display 151 can be input to second manipulating unit 132.

Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

For clarity and convenience of the following description, a mobile terminal mentioned in the following description is assumed as including at least one of the components shown in FIG. 1.

Alarm of Application Having Incomplete Job

As mentioned in the foregoing description, while a job for one application is incomplete, if the corresponding application is interrupted, it is necessary to inform a user of such situation.

According to one embodiment of the present invention, if activation of an application having an incomplete job is interrupted, a time setting means is proposed to be displayed. Therefore, an alarm and notification time for the corresponding job can be conveniently set and the set alarm time can be conveniently checked and changed.

In this case, the interruption of the application having the incomplete job may mean a following case. First of all, while such an application capable of editing a text/content as SMS, email, SNS, IM (instant messenger), memo, multimedia editor and the like is active, after a new job or an editing job has started, the corresponding application is interrupted without performing an operation of saving, sending or deleting. Moreover, the interruption of the application having the incomplete job may mean a following case. First of all, while a voice or video call application, for which establishment of uni- or bi-directional communications is required, is active, the corresponding application is interrupted without establishment of a desired communication status. For instance, as a call signal is received, while a voice call application is active, if a voice call is not established in response to a call accept command, it may correspond to this case.

Moreover, the interruption of the application may mean a case that a back or end key button for interrupting an application or a home key button 131 for performing a function of shortcut to a home screen or the like is selected. In this case, the back key button or the end key button may include a virtual key button displayed on a touchscreen or a hardware key button (e.g., a key button of a touch type, etc.) provided to a mobile terminal body. And, the interrupted application may operate as a background application without being completely ended in an operating system supportive of multitasking.

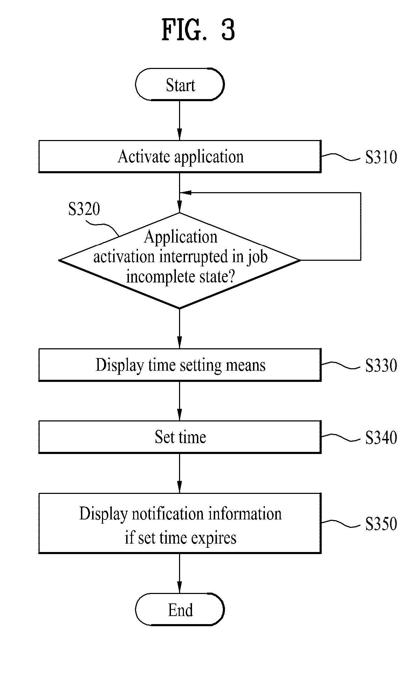

In the following description, a process for setting an alarm to inform a user of a presence of an incomplete job according to the present invention is explained with reference to FIG. 3.

FIG. 3 is a flowchart for one example of a method of setting an alarm due to interruption of an application having an incomplete job in a mobile terminal according to one embodiment of the present invention.

Referring to FIG. 3, an application is activated [S310]. In this case, as mentioned in the foregoing description, the activated application may include an application capable of writing a new text or content, amending a text or content, transmitting a text or content, establishing an interactive communication, or the like. And, the corresponding application can be activated in response to a user's command input, an event occurrence (e.g., a call signal reception, a message reception, etc.).

After the application has been activated, while a job is incomplete, if the activation of the corresponding application is interrupted due to a user's action of pressing a home key button or a back key button, activation of a different application (i.e., an activation switching) [S320], the controller 180 can control a time setting means for setting an alarm time to be displayed on the touchscreen 151 [S330].

In doing so, the time setting means may be displayed as a popup window or a full screen. In particular, a remaining time may be set in a manner of being represented as a timer or a specific timing may be set to an absolute time. And, its details shall be described later.

An alarm time can be determined through the time setting means [S340]. Once the set time comes, it is able to output an information indicating that the application having the incomplete job is interrupted [S350]. In this case, the outputted information may include at least one of a visual information displayed on the touchscreen 151, an auditory information through the audio output unit 152 and/or the alarm unit 153, a haptic information (e.g., vibration, etc.) through the haptic module and combinations thereof. Of course, the interrupted application can be automatically resumed depending on the setting instead of outputting the information indicating that the application having the incomplete job is interrupted.

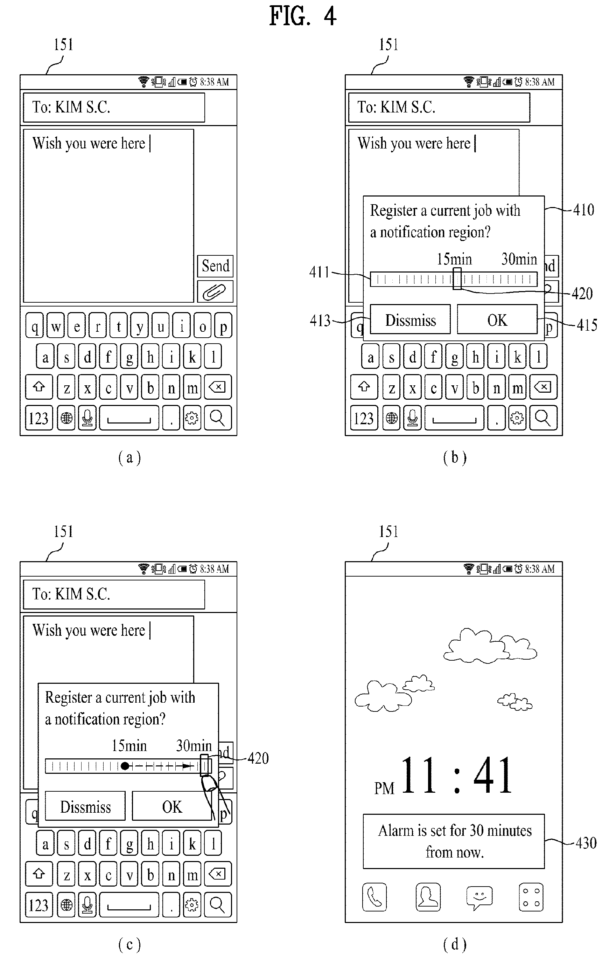

In the following description, methods of setting an alarm time in an application having an incomplete job are explained in detail with reference to FIGs. 4 to 8 as follows.

FIG. 4 is a diagram for one example of a method of setting an alarm time after stopping a message writing in a mobile terminal according to one embodiment of the present invention.

Referring to FIG. 4 (a), as a text message writing application is activated, a user interface of the corresponding application is displayed on the touchscreen 151. In particular, a text message recipient is specified, as shown in the drawing, and a job is not completed yet despite a message text is written because a corresponding sending is not performed yet.

In doing so, if a user presses a home key button 131, the controller 180 determines whether the job for the corresponding application is completed. As a result, if the job is incomplete, referring to FIG. 4 (b), the controller 180 can control a time setting means 410 to be displayed as a popup window on the touchscreen 151.

In this case, the time setting means 410 may be configured in a manner that an indicator 420 is arranged on a vertical line 411 indicating a time duration. Moreover, a cancel button (Dismiss) 413 and a confirm button (OK) 415 can be additionally included in the time setting means 410. Once the Dismiss button 413 is selected, the corresponding application is interrupted without alarm setting, a home screen is entered, and a screen, which used to be displayed last before the corresponding application was activated, can be then displayed. If the OK button 415 is selected, an alarm time corresponding to an hour, at which the indicator 420 is located on the vertical line 411, can be set.

The indicator 420 can move on the vertical line in response to a user's touch input (or touch & drag input). When the time setting means 410 is displayed, it may be located at the hour (e.g., 15 min in FIG. 4) set to a default. The hour set to the default may be identically applicable to all applications or may be set different depending on each application.

Referring to FIG. 4 (c), as the indicator 420 is dragged, it is shifted to a point corresponding to 30 minutes on the vertical line. Subsequently, if the OK button 415 is selected, the setting of the alarm time can be completed. If the corresponding application is interrupted through the home key button 141, referring to FIG. 4 (d), a home screen is displayed and a message 430 indicating that the alarm setting is complete can be then displayed.

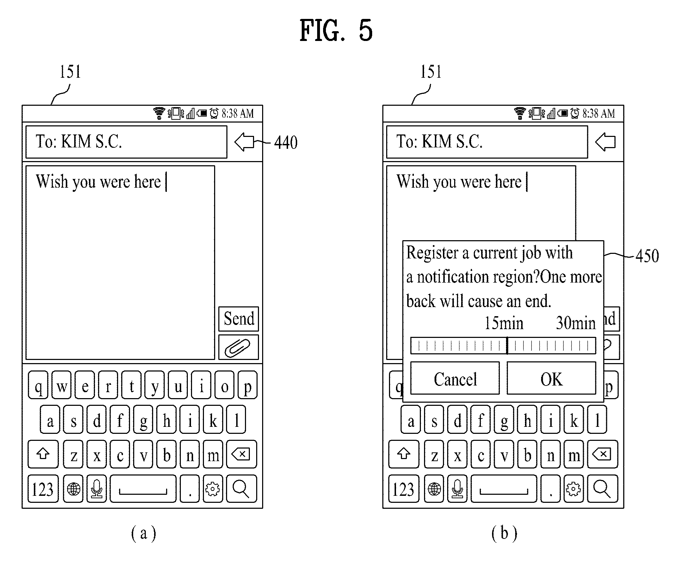

With reference to FIG. 4, the case of interrupting the application through the home key button is described. In the following description, a case of interrupting an application through a back key button is described with reference to FIG. 5.

FIG. 5 is a diagram for another example of a method of setting an alarm time after stopping a message writing in a mobile terminal according to one embodiment of the present invention.

Referring to FIG. 5 (a), in a manner similar to that shown in FIG. 4 (a), as a text message writing application is activated, a user interface of the corresponding application is displayed on the touchscreen 151. Yet, a back button 40 is displayed on the user interface in addition.

If the back button 440 is selected, the controller 180 determines whether an incomplete job for the corresponding application exists. If the incomplete job exists, referring to FIG. 5 (b), the controller 180 can display a time setting means 450. Subsequently, if the back button 440 is selected once more, the corresponding application can be interrupted without alarm time settings. Moreover, if the corresponding application is interrupted through the back button, a text, which indicates that the corresponding application will be interrupted if the a back command is inputted once more, can be included in the message displayed on the time setting means 450. Of course, a function of the back button 440 shown in FIG. 5 can be substituted with a hardware key button provided to the mobile terminal body.

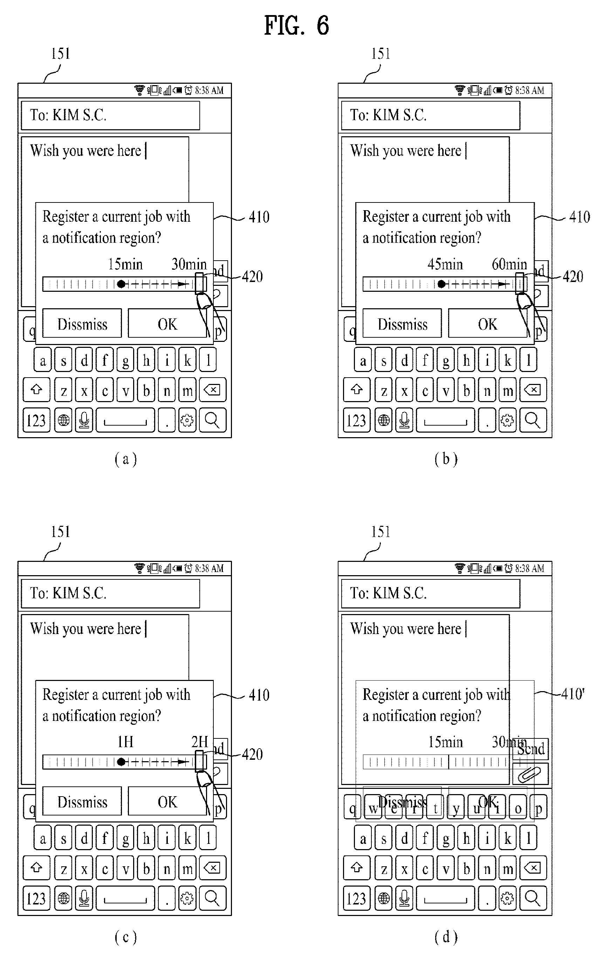

Meanwhile, it may be necessary to set a time deviating from a time range displayed on a vertical line of a time display means. To this end, a method of changing an alarm time is described with reference to FIG. 6 as follows.

FIG. 6 is a diagram for one example of a method of changing an alarm time in a mobile terminal according to one embodiment of the present invention.

Referring to FIG. 6 (a), if a user intends to set an alarm time to a time longer than 30 minutes that is a maximum time displayed on a vertical line of a time setting means 410, the user can maintain a state of dragging an indicator 420 to a right end. If so, referring to FIG. 6 (b), a time range of the vertical line can increase. If a location of the indicator 420 is further maintained at the right end of the vertical line, referring to FIG. 6 (c), a unit of the time range can be changed into a unit greater than a current unit.

Meanwhile, referring to FIG. 4 (c), a prescribed transparency level may be given to a popup window 410' including the time setting means. A user can adjust the transparency level through a prescribed setting menu. And, a different transparency level may be set for each application.

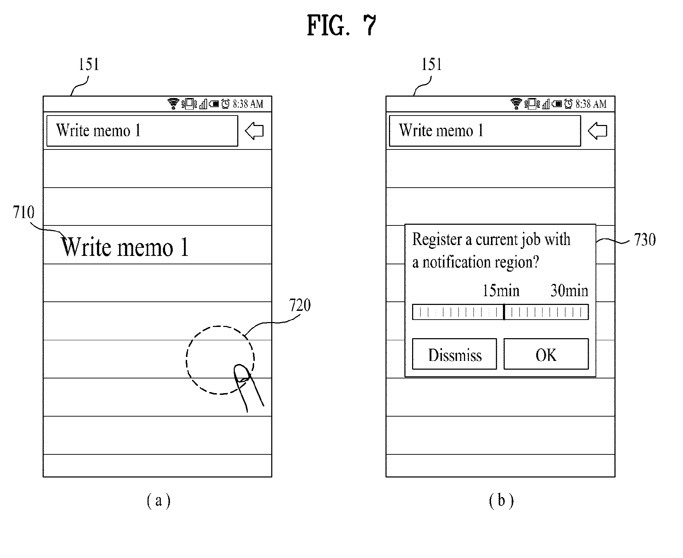

FIG. 7 is a diagram for one example of a method of setting an alarm time after stopping a message writing in a mobile terminal according to one embodiment of the present invention.

Referring to FIG. 7 (a), as a memo application is activated, a user interface of the corresponding application is displayed on the touchscreen 151. In particular, after a memo 710 has been written along a trace of a pointer, since a saving operation is not performed, as shown in the drawing, a corresponding job is not completed yet. In doing so, if a prescribed touch input (e.g., a long touch, a consecutive double-touch, etc.) to an empty space 720, in which a memo is not written, through a pointer is detected, referring to FIG. 7 (b), the controller can display a time setting means 730 for the memo application. Of course, in the case shown in FIG. 7, the time setting means can be displayed through a manipulation of a home key button or a back key button.

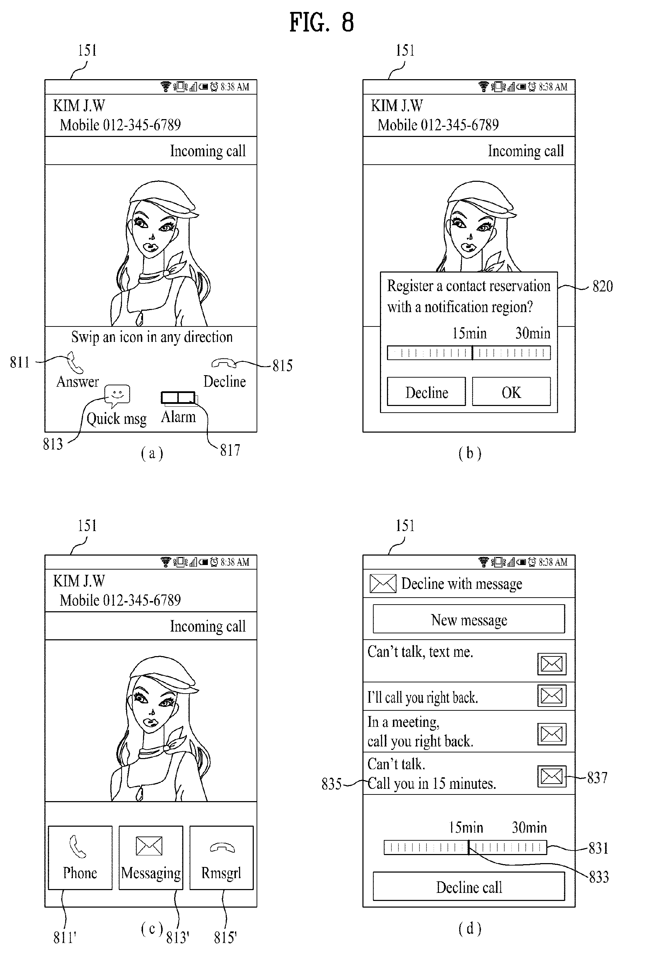

In the following description, a method of setting an alarm for a voice call in response to a call signal reception is explained with reference to FIG. 8.

FIG. 8 is a diagram for one example of a method of setting an alarm time after stopping a call application due to a cell signal reception in a mobile terminal according to one embodiment of the present invention.

Referring to FIG. 8 (a), as a call signal is received by the mobile terminal, a voice call application is activated and a user interface in call connection standby state is then displayed on the touchscreen 151. In this case, the user interface may include a call accept menu 811, a message send menu 813 for sending a message indicating the reason for call unavailability on declining a call, a simple call decline menu 815, and an alarm menu 817 for setting an alarm time for an incomplete call.

In doing so, if the alarm menu 817 is selected, referring to FIG. 8 (b), the controller 180 declines a call connection in response to a call signal and can control a time setting means 820 to be displayed on the touchscreen 151. After an alarm time has been set through the time setting means, if a set time comes, the controller 180 can output an information indicating that there was an unconnected call attempt from a counterpart. Moreover, a text message indicating that a contact will be made after a set time can be automatically sent to a counterpart in accordance with a setting.

If the user interface for a case of a call signal reception is configured with a call accept menu 811', a message send menu 813' and a call decline menu 815', as shown in FIG. 8 (c),an alarm setting menu may not be provided. In this case, referring to FIG. 8 (d), if the message send menu 813' is selected, a time setting means and a notification link message linked to the time setting means can be displayed together with pre-written and selectable messages. In particular, if a location of an indicator 833 on a vertical line 831 is changed, a time value 835 of the notification link message can be changed. In this state, if a menu 837 for sending the corresponding message is selected, the notification link message including the set alarm time is sent to a counterpart, the corresponding call is declined, and an information indicating a presence of an unconnected call attempt from a counterpart can be outputted.

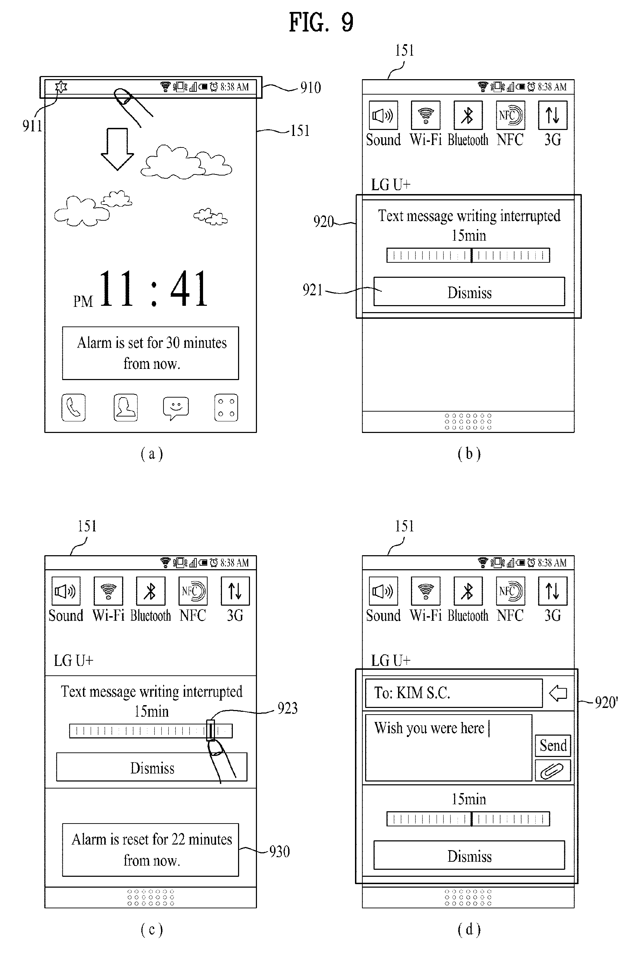

In the following description, a method of checking or changing an alarm time is explained with reference to FIG. 9.

FIG. 9 is a diagram for one example of a method of checking or changing a set alarm time due to interruption of an application having an incomplete job in a mobile terminal according to one embodiment of the present invention.

In FIG. 9, assume a case that an alar time is already set up through a time setting means displayed due to an interruption of an application having an incomplete job by one of the aforementioned methods. Information on the set alarm time may be displayed on a notification region appearing in response to a prescribed touch input applied to an indicator region. In this case, the indicator region is the region that is always displayed on a top touchscreen end except a case that an application running on a full screen is activated. In the indicator region, indicators indicating status informations related to operations (e.g., a current hour, a battery status, an event occurrence history, etc.) of the mobile terminal are displayed. On the other hand, the notification region may be called a quick panel. The notification region generally means a layer appearing down like a curtain in response to dragging the indicator region in bottom direction. And, various event related informations can be displayed in the notification region. As the notification region is paged, a screen previously displayed under the indicator region is blocked by the notification region. Optionally, a prescribed transparency level may be given to the notification region depending on settings. Depending on operating systems, a plurality of toggle icons for determining whether to use various functions (e.g., Wi-Fi, GPS, Bluetooth, data packet communication, etc.) of the mobile terminal may be arranged on a top end of the notification region or a control menu (e.g., a play button of a music player, etc.) for controlling prescribed functions of an application may be displayed on the top end of the notification region.

Referring to FIG. 9 (a), an icon 911, which indicates that an alarm time is set due to an interruption in a job-incomplete state, can be displayed on an indicator region 910. On the corresponding icon 911, the number of alarm time set applications may be displayed. Yet, the corresponding icon may not be displayed on the indicator region depending on settings.

If a touch & drag is performed in a bottom direction on the indicator region 910, referring to FIG. 9 (b), a notification region can be displayed. And, an alarm information 920 may be displayed on the notification region. In particular, the notification region 920 can include a text information indicating whether a prescribed application is interrupted in a job incomplete state, a vertical line, an indicator indicating a remaining time on the vertical line, and an alarm dismiss button 921. As a time elapses, the indicator moves in a left direction of the vertical line to indicate that a remaining time decreases by real time.

In doing so, if a location of the indicator is shifted on the vertical line of the alarm information 920, an alarm time can be changed in accordance with a shifted direction. For instance, referring to FIG. 9 (c), if the indicator 923 is shifted in a right direction of the vertical line, the alarm time gets longer by a shifted distance, whereby a popup message 930 indicating that the alarm time is changed can be outputted. In case that the interrupted application includes the voice call application shown in FIG. 8 for example, once the alarm time is changed, it is able to automatically send a text message indicating the alarm time change to a counterpart. In doing so, if the alarm time is changed multiple times, a text having the meaning of a heavier apology may be included in a content of the automatically sent message.

On the other hand, referring to FIG. 9 (d), instead of or together with a text information indicating whether a prescribed application is interrupted in a job incomplete state, a screen shot (or at least one portion) of an active image on the interruption of the corresponding application can be displayed.

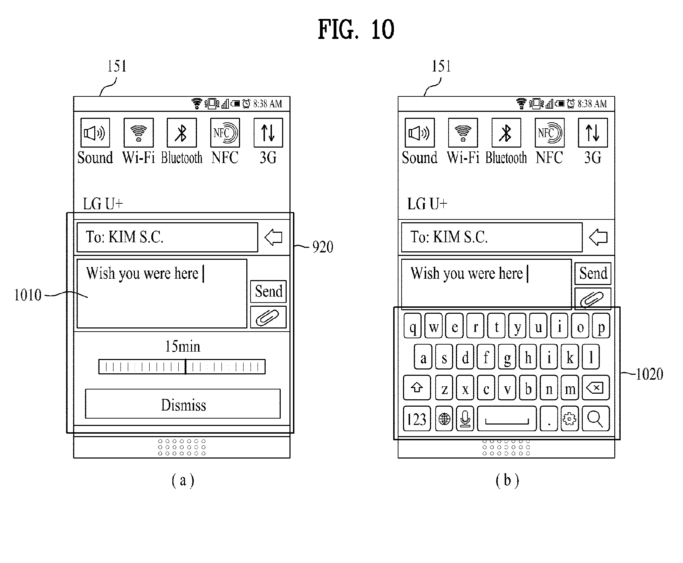

In the following description, a method of resuming an incomplete job of an interrupted application before expiration of a set alarm time is explained in detail with reference to FIG. 10.

FIG. 10 is a diagram for one example of a method of resuming an incomplete job of an interrupted application before expiration of an alarm time set in a mobile terminal according to one embodiment of the present invention.

In FIG. 10, assume a case that an alarm is set up due to an interruption of an SMS application in the course of writing a message by one of the former methods described with reference to FIG. 4 and FIG. 5.

Referring to FIG. 10 (a), the former alarm information 920 mentioned in the foregoing description with reference to FIG. 9 (d) may be displayed on an alarm region. If a region 1010 corresponding to a screen shot is selected, an activation of an interrupted application can be resumed on the notification region. In particular, referring to FIG. 10 (b), a virtual keypad 1020 appears on a bottom end of the notification region and the region corresponding to the screen shot can be substituted with an actual active screen of the application. In doing so, if the writing and sending of the message are completed, the alarm information and the active screen of the application can disappear from the notification region. Depending on a setting or a type of an application, if the region corresponding to the screen shot is selected, the corresponding application can be paged into a display state (e.g., a full screen activation, etc.) before the interruption instead of resuming the activation of the corresponding application on the notification region.

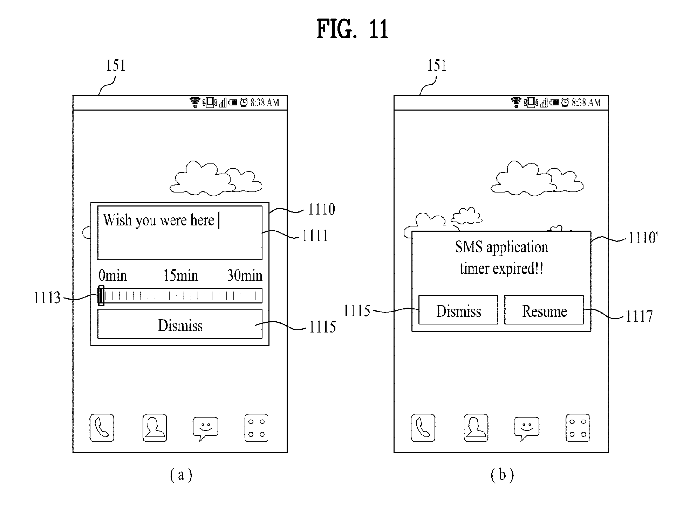

In the following description, a case of reaching an alarm time is explained in detail with reference to FIG. 11.

FIG. 11 is a diagram for one example of an information outputted in response to expiration of an alarm time set for an application interrupted in a job-incomplete state in a mobile terminal according to one embodiment of the present invention.

Referring to FIG. 11 (a), as a set alarm time expires, an alarm expiration information 1110 may be displayed on the touchscreen 151. In this case, the alarm expiration information 1110 may include at least one portion (or a screen shot including the same) 1111 of a job content on interruption of an application, an indicator 1113 arriving at a left end of a vertical line, and a dismiss button 1115. If the job content 1111 is selected, the corresponding application is re-paged and an interrupted job can be then resumed. If the dismiss button 1115 is selected, the alarm expiration information 1110 is not displayed anymore and the alarm information may disappear from the notification region.

Referring to FIG. 11 (b), a different alarm expiration information 1110' may be configured. In this case, a text information indicating a type of an interrupted application and a job resume button 1117 may be included in the alarm expiration information 1110' unlike FIG. 11 (a). If the job resume button 1117 is selected, the corresponding application is re-paged and the interrupted job can be then resumed.

Of course, a prescribe sound and/or vibration can be outputted as well as the above-described alarm expiration information is displayed on the touchscreen.

Meanwhile, according to another example of the present embodiment, it is able to set or check an alarm even if a job manager mode is paged. In this case, the job manager mode is the mode capable of checking an application currently operating as a background instead of being completely ended. The application currently operating as the background may be simply displayed as a text list or an icon list and may include a screen shot on the interruption. Of course, if an application used to be activated recently despite failing in operating as a background, the corresponding application may be displayed in the job manager mode.

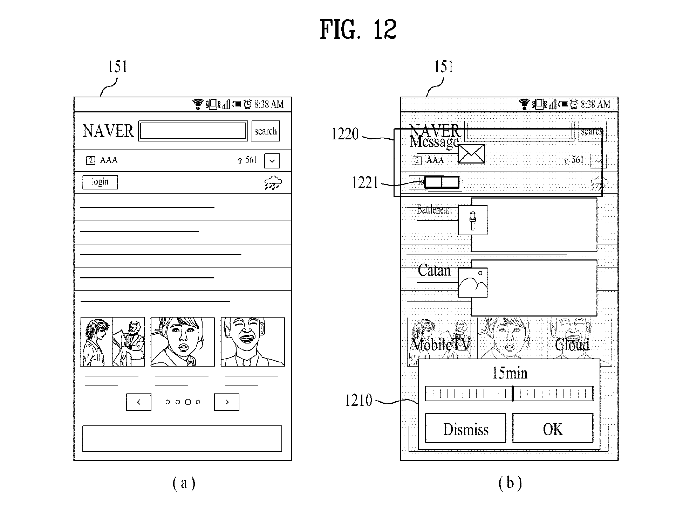

FIG. 12 is a diagram for another example of a method of setting and checking an alarm according to one embodiment of the present invention. In FIG. 12, it is not mandatory for an incomplete job to exist in a currently active application.

Referring to FIG. 12 (a), while a web browser application is active, a user presses a home key button long. If so, referring to FIG. 12 (b), a job manager mode can be paged. In the job manager mode, a time setting means 1210 for setting an interruption alarm for a currently active application is displayed. And, a list of applications currently operating as background is displayed over the time setting means 1210. For an interruption alarm set application in the list, a vertical line 1221 indicating an alarm set time can be displayed. In this case, a user can check or change the alarm time through a location of an indicator on the vertical line 1221.

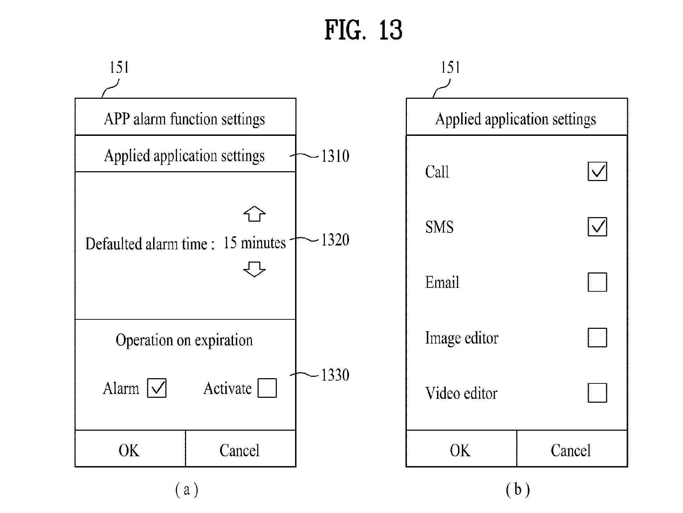

In the following description, one example of a function setting screen applicable to the former embodiments mentioned in the foregoing description is explained in detail with reference to FIG. 13.

FIG. 13 is a diagram of display configuration indicating one example of a function setting screen applicable to embodiments of the present invention.

In response to a prescribed menu manipulation through the touchscreen, a function setting screen for changing detailed settings of a notification function for informing a user of a presence of an application in job incomplete state can be displayed as shown in FIG. 13 (a).

Referring to FIG. 13 (a), a function setting screen may include an applied application setting menu 1310 for setting an application, to which a corresponding function will be applied, a default timer menu 1320 for setting a time to be displayed as default on a time setting means, and an operation menu 1330 for determining whether to simply output a notification information only or activate a corresponding application in case of expiration of a set time.

In doing so, if the applied application setting menu 1310 is selected, referring to FIG. 13 (b), an application list can be displayed to enable a user to directly select an application, to which a notification function will be applied, in case of a presence of an incomplete job according to the present invention.

In particular, the application list may include entire applications installed on the mobile terminal or prescribed applications filtered by prescribed references. In this case, if an application selected through a check box is interrupted/switched, the controller 180 determines whether the corresponding application is in job incomplete state and is then able to display a time setting means depending on a corresponding result. On the contrary, if an unselected application is interrupted/switched/ended, the controller 180 can directly interrupt/switch/end the corresponding application without determining a presence or non-presence of an incomplete job of the corresponding application.

According to the embodiments mentioned in the foregoing description, a time setting means sets an alarm time using a vertical line and an indicator on the vertical line, by which the present invention may be non-limited. And, it is apparent to those skilled in the art, to which the present invention pertains, that the time setting means can be replaced by various types of a time gauge, a digital timer and the like.

Moreover, an alarm information may be displayed in a different configuration such as a widget of a home screen and the like instead of being displayed on a notification region. Alternatively, the alarm information may be displayed in different configuration such as a widget of a home screen and the like together with the notification region.

According to one embodiment of the present invention, the above-described methods can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments of the mobile terminal and controlling method thereof are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100) comprising:
a touchscreen(151); and
a controller(180), if a 1^{st} application is interrupted, ended or job-switched to a 2^{nd} application, determining whether the 1^{st} application is in job incomplete state, the controller if the 1^{st} application is in the job incomplete state, displaying a time setting means divided by a prescribed time unit on the touchscreen, the controller, if a time is set in response to a touch input applied to the time setting means, registering the set time with a predetermined region, the controller, if the set time expires, controlling a notification information on the 1^{st} application to be displayed on the touchscreen.

2. The mobile terminal of claim 1, wherein after a new writing or editing of a text or multimedia content has been started in the 1^{st} application, if a saving, a deleting or a sending is not completed, the controller determines that the 1^{st} application is in the job incomplete state.

3. The mobile terminal of claim 1, wherein the 1^{st} application comprises a call application and wherein if a call connection in response to an incoming call signal is not established in the call application, the controller determines that the 1^{st} application is in the job incomplete state.

4. The mobile terminal of claim 3, wherein if the call connection in response to the incoming call signal is declined in the 1^{st} application, the controller controls a message corresponding to the set time to be sent to a counterpart.

5. The mobile terminal of any one of claims 1 to 4, wherein the predetermined region comprises a notification region displayed if a touch input of a prescribed pattern is applied to an indicator region on a top of the touchscreen.

6. The mobile terminal of claim 5, wherein if the time is set, the controller further displays the time setting means on the notification region.

7. The mobile terminal of claim 6, wherein if the time set through the time setting means displayed on the notification region is changed, the controller controls the notification information to be outputted on the changed time.

8. The mobile terminal of claim 5, wherein the predetermined region comprises an information on the 1^{st} application.

9. The mobile terminal of claim 8, wherein if the information on the 1^{st} application is selected, the controller controls the 1^{st} application to be reactivated.

10. The mobile terminal of claim 9, wherein the controller controls the reactivated 1^{st} application to be displayed on the predetermined region.

11. The mobile terminal of claim 9, wherein if the 1^{st} application is reactivated, the controller deregisters the set time.

12. The mobile terminal of any one of claims 1 to 11, further comprising a user input unit(130), wherein if a job interrupt command or an application end command is inputted through the user input unit, the controller interrupts or ends the 1^{st} application.

13. A method of controlling a mobile terminal, comprising the steps of:
activating a 1^{st} application(S310);
interrupting/ending the 1^{st} application or job-switching the 1^{st} application to a 2^{nd} application(S320);
determining whether the 1^{st} application is in job incomplete state(S320);
if the 1^{st} application is in the job incomplete state, displaying a time setting means divided by a prescribed time unit on a touchscreen(S330);
setting a time in response to a touch input applied to the time setting means(S340);
registering the set time with a predetermined region(S340); and
if the set time expires, displaying a notification information on the 1^{st} application on the touchscreen(S350).

14. The method of claim 13, the determining step comprising the step of after a new writing or editing of a text or multimedia content has been started in the 1^{st} application, if a saving, a deleting or a sending is not completed, determining that the 1^{st} application is in the job incomplete state.

15. The method of claim 13, wherein the 1^{st} application comprises a call application and wherein the determining step comprises the step of if a call connection in response to an incoming call signal is not established in the call application, determining that the 1^{st} application is in the job incomplete state.
